Europäisches Patentamt

(19) European Patent Office

Office européen des brevets

(11) Publication number: **0 046 030**
**B1**

# EUROPEAN PATENT SPECIFICATION

(12)

(45) Date of publication of patent specification: **13.06.84**

(51) Int. Cl.³: **E 04 B 1/19,** G 09 B 25/04

(21) Application number: **81303477.4**

(22) Date of filing: **28.07.81**

(54) **A framework structure.**

(30) Priority: **07.08.80 GB 8025734**
**20.02.81 GB 8105522**

(43) Date of publication of application:
**17.02.82 Bulletin 82/7**

(45) Publication of the grant of the patent:
**13.06.84 Bulletin 84/24**

(84) Designated Contracting States:
**BE DE FR IT NL**

(56) References cited:
**DE - A - 2 045 688**
**FR - A - 2 142 152**
**US - A - 3 921 360**

(73) Proprietor: **Stephenson, Colin John Stewart**
**Flat 5 56 Claremont Road**
**Highgate, London (GB)**

(72) Inventor: **Stephenson, Colin John Stewart**
**Flat 5 56 Claremont Road**
**Highgate, London (GB)**

(74) Representative: **Higgins, Michael Roger et al,**
**Marks & Clerk 57/60 Lincoln's Inn Fields**
**London WC2A 3LS (GB)**

Courier Press, Leamington Spa, England.

## Description

This invention relates to a framework structure which may be used, for example, as a display structure or space frame.

It is known from FR—A—2 142 152 to provide connectors and elongate connecting elements for constructing geometric figures or shapes as a toy or for purposes of research, scientific studies, mathematical displays and illustrations and architectural studies. However, the component parts are not designed for use as a frame work structure. The connectors each have a multiplicity of projections of various cross-sectional shapes which each receive a socket of corresponding cross-sectional shape. The need to match the shape of the sockets to the projections would be unnecessarily time consuming in constructing a framework structure and the finished product may not be aesthetically pleasing. Moreover, because the interengaging projections and sockets are of corresponding cross-sectional shape the fit between the projections and sockets will be unsatisfactory for use in a space frame.

It is an object of the invention to provide a framework structure which does not have the above mentioned drawbacks.

The invention provides a framework structure comprising a plurality of elongate members and a plurality of connectors connecting together the elongate members, each connector comprising a body, a first group of at least four projections extending outwardly from the body, and being equi-angularly spaced about an axis normal to a plane parallel to the direction in which each projection of the first group extends from the body, and a second group of at least four projections extending outwardly from the body and being equi-angularly spaced about said axis, the projections of said second group extending at between 15° and 75° to the aforesaid plane, wherein each projection of said first and second groups is of similar non-circular cross-sectional shape, and wherein the elongate members have deformable cylindrical or substantially cylindrical tubular ends at least so as to make an interface fit with respective projections.

Preferably, the projections of said second group each extend at 45° or substantially 45° to the aforesaid plane.

Preferably, there is an equal number of projections in said first and second groups and the projections of the second group are angularly staggered by half the angle between adjacent projections of the first group about said axis relative to the projections of the first group.

Conveniently, the body part includes a cylindrical or substantially cylindrical surface portion from which the first group of projections extend and a part spherical or substantially part spherical end portion adjoining the cylindrical portion and from which the second group of projections extend.

Advantageously, each projection is of triangular or substantially triangular cross-section. In this case, preferably, a flat or a substantially flat portion is provided at the junction between each pair of adjacent sides of each triangular or substantially triangular projection.

Conveniently, the projections and body of the connector are made of non-flexible plastics material.

Preferably, the elongate members are tubes and are made of deformable plastics material.

The invention also provides a plurality of elongate members and a plurality of connectors for connecting together the elongate members to form a framework structure, as set forth in claim 9.

The invention will now be more particularly described with reference to the accompanying drawings, wherein:

Figure 1 is a perspective view of one embodiment of a connector according to the invention;

Figure 2 is an end view of the connector of Figure 1;

Figure 3 is a cross-sectional view showing a tube mounted on a projection of the connector of Figures 1 and 2;

Figure 4 is a schematic view showing a plurality of elongate members connected together by connectors of Figures 1—3 to form a space frame.

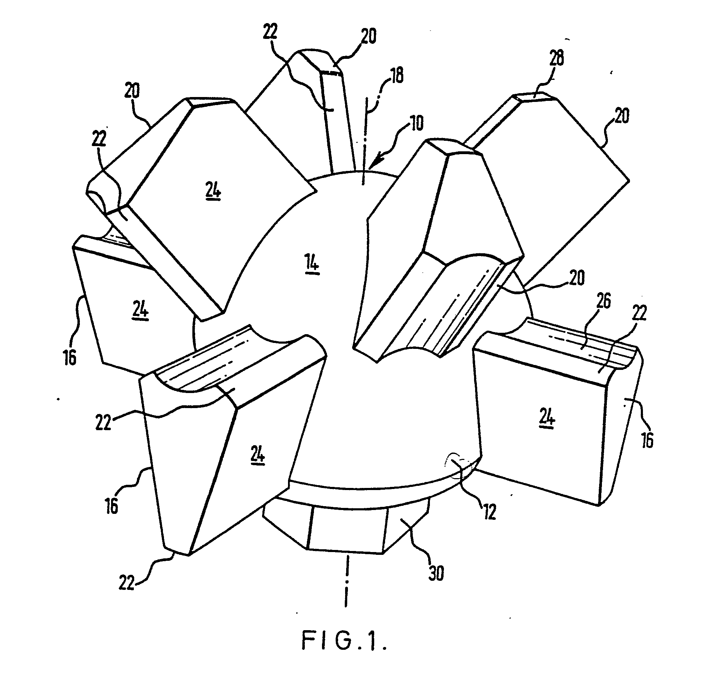

Referring to Figures 1—4 of the drawings, the connector shown therein comprises a body part 10 having a cylindrical surface portion 12 and a part-spherical end portion 14 which adjoins the cylindrical portion 12. The other end portion of the body part will be referred to later. A first group of four projections 16 extend outwardly from the cylindrical surface portion 12 and are equi-angularly spaced about an axis 18 of the cylindrical portion 12. These projections 16 extend in a common plane which is normal to the axis 18. A second group of four projections 20 extend outwardly from the part-spherical end portion 14 of the body part 10. These projections 20 are also equi-angularly spaced about axis 18 but are angularly staggered by 45° about this axis relative to the projections 16. Also, the projections 20 extend at an angle of between 15° and 75°, and preferably at 45°, to said common plane.

Each projection 16, 20 is of non-circular cross-section and ideally is of substantially triangular cross section as shown. Each projection 16, 20 has a flat 22 at the junction between each pair of sides. Each flat 22 may be slightly convex.

Each projection has two sides 24 of equal length and a side 26 of shorter length. Each side 26 has a concave recess.

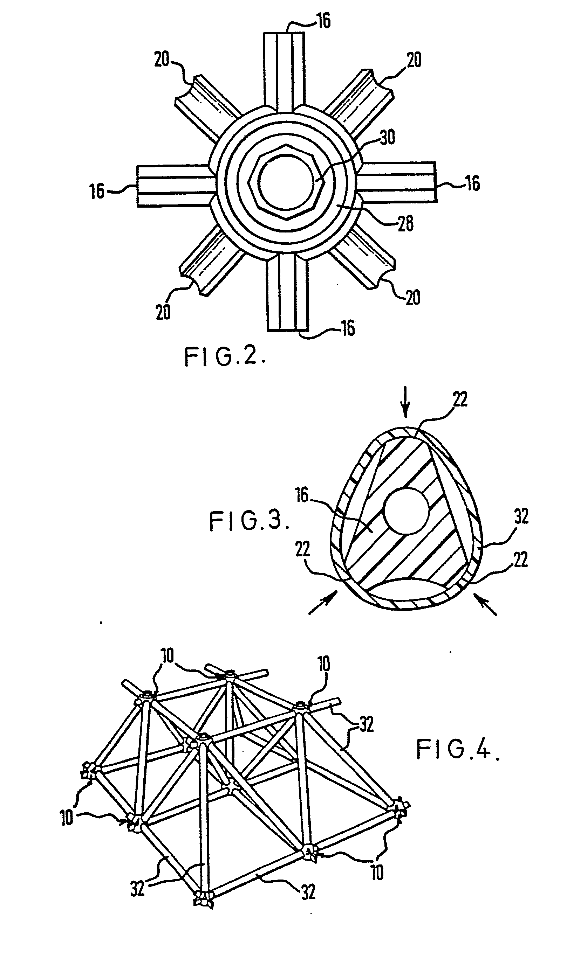

The other end of the connector is provided with an axially inwardly extending annular groove 28 (see Figure 2) which may receive the end of a tube serving as a vertical support column and as shown this other end of the connector is also provided with an integral, hexagonal nut 30.

The connector is conveniently formed from non-flexible plastics material, such as that sold by I.C.I. under the Trademark 'Noryl'®.

A plurality of such connectors can be used to connect together elongate members in the form of deformable plastics cylindrical tubes 32 (see Figure 4) to form a space frame which may be used, for example, as a display stand. In order to locate a tube 32 on a projection 16, 20, an end of the tube is deformed, by hand pressure, and is pushed over the projection and is then released. The inner wall of the tube is engaged by each of the three flats 22 of the projection as an interference fit (see Figure 3).

Instead of the tubes 32, solid rods, with cylindrical deformable plastics sockets at each end, could be used.

The connectors and tubes described above could be scaled down for use as a toy or an architect's model.

If desired, the tubes 32 could be heat welded to the projections 16, 20 in order to provide a permanent installation or, if the tubes 32 and connectors are of the same material, the tubes may be secured to the projections of the connectors by adhesive.

Moreover, the part spherical end portion may have grooves formed therein each groove joining a diametrically opposite pair of projections 16 and acting in conjunction with the concave recesses in the sides 26 of the associated projections 16 as a location for a cable which can run through the tubes.

## Claims

1. A framework structure comprising a plurality of elongate members (32) and a plurality of connectors connecting together the elongate members, each connector comprising a body (10), a first group of at least four projections (16) extending outwardly from the body, and being equi-angularly spaced about an axis (18) normal to a plane parallel to the direction in which each projection of the first group extends from the body, and a second group of at least four projections (20) extending outwardly from the body and being equi-angularly spaced about said axis, the projections of said second group extending at between 15° and 75° to the aforesaid plane, characterised in that each projection of said first and second groups is of similar non-circular cross-sectional shape, and in that the elongate members have deformable cylindrical or substantially cylindrical tubular ends at least so as to make an interference fit with respective projections.

2. The structure of claim 1, characterised in that the projections (20) of said second group each extend at 45° or substantially 45° to the aforesaid plane.

3. The structure of claim 1 or 2, characterised in that each projection (16, 20) is of triangular or substantially triangular cross-section.

4. The structure of claim 3, characterised in that a flat or a substantially flat portion (22) is provided at the junction between each pair of adjacent sides (24, 26) of each projection (16, 20).

5. The structure of any one of the preceding claims, characterised in that there is an equal number of projections in said first and second groups and the projections (20) of the second group are angularly staggered by half the angle between adjacent projections (16) of the first group about said axis (18) relative to the projections (16) of the first group.

6. The structure of any one of the preceding claims, characterised in that the body part includes a cylindrical or substantially cylindrical surface portion (12) from which the first group of projections (16) extend and a part spherical or substantially part spherical end portion (14) adjoining the cylindrical portion (12) and from which the second group of projections (20) extend.

7. The structure of any one of the preceding claims, characterised in that the projections (16, 20) and body (10) of the connector are made of non-flexible plastics material.

8. The structure of any one of the preceding claims, characterised in that the elongate members (32) are tubes and are made of deformable plastics material.

9. A plurality of elongate members and a plurality of connectors for connecting together the elongate members to form a framework structure, each connector comprising a body (10), a first group of at least four projections (16) extending outwardly from the body, and being equi-angularly spaced about an axis (18) normal to a plane parallel to the direction in which each projection of the first group extends from the body, and a second group of at least four projections (20) extending outwardly from the body and being equi-angularly spaced about said axis, the projections of said second group extending at between 15° and 75° to the aforesaid plane, characterised in that each projection of said first and second groups is of similar non-circular cross-sectional shape, and in that the elongate members (32) have deformable cylindrical or substantially cylindrical tubular ends at least for making an interference fit with the projections.

## Revendications

1. Structure de châssis comprenant une pluralité d'éléments allongés (32) et une pluralité de raccords reliant ensemble les éléments allongés, chaque raccord comprenant un corps (10), un premier groupe d'au moins quatre châssis (16) s'étendant vers l'extérieur à partir du racord et espacées d'angles égaux autour d'un axe (18) perpendiculaire à un plan parallèle à la direction dans laquelle chaque saillie du premier groupe s'étend à partir du corps, et un second groupe d'au moins quatre saillies (20) s'étendant vers l'extérieur à partir du corps et espacées d'angles égaux autour dudit axe, les saillies du second groupe s'étendant d'un angle compris entre 15 et 75° par rapport au plan précité, caractérisée en ce que chaque saillie du premier et du second groupe a une forme de section droite non circulaire semblable et en ce que les éléments allongés comportent des extrémités tubulaires cylindriques ou sensiblement cylindriques déformables au moins de manière à établir un emboîtement serré avec des saillies respectives.

2. Structure selon la revendication 1, caractérisée en ce que les saillies (20) dudit second groupe s'étendent chacune à 45°, ou sensiblement à 45°, par rapport au plan précité.

3. Structure selon la revendication 1 ou 2, caractérisée en ce que chaque saillie (16, 20) a une section droite triangulaire ou sensiblement triangulaire.

4. Structure selon la revendication 3, caractérisée en ce qu'une partie plate ou sensiblement plate (22) est prévue à la jonction entre chaque paire de côtés adjacents (24, 26) de chaque saillie (16, 20).

5. Structure selon l'une quelconque des revendications précédentes, caractérisée en ce qu'il est prévu un nombre égal de saillies dans lesdits premier et second groupes et en ce que les saillies (20) du second groupe sont quinconcées angulairement de la moitié de l'angle entre des saillies adjacentes (16) du premier groupe autour de l'axe (18) par rapport aux saillies (16) du premier groupe.

6. Structure selon l'une quelconque des revendications précédentes, caractérisée en ce que la partie de corps comprend une portion de surface cylindrique ou sensiblement cylindrique (12) à partir de laquelle le premier groupe de saillies (16) s'étendent et une portion extrême partiellement sphérique ou sensiblement partiellement sphérique (14), adjacentes à la portion cylindrique (12) et à partir de laquelle le second groupe de saillies (20) s'étendent.

7. Structure selon l'une quelconque des revendications précédentes, caractérisée en ce que les saillies (16, 20) et le corps (10) du raccord sont formés d'une matière plastique non flexible.

8. Structure selon l'une quelconque des revendications précédentes, caractérisée en ce que les éléments allongés (32) sont des tubes et sont formés d'une matière plastique déformable.

9. Une pluralité d'éléments allongés et une pluralité de raccords pour relier ensemble les éléments allongés afin de former une structure de châssis, chaque raccord comprenant un corps (10), un premier groupe d'au moins quatre saillies (16) s'étendant vers l'extérieur à partir du corps et espacées d'angles égaux autour d'un axe (18) perpendiculaire à un plan parallèle à la direction dans laquelle chaque saillie du premier groupe s'étend à partir du corps, et un second groupe d'au moins quatre saillies (20) s'étendant vers l'extérieur à partir du corps et étant espacées d'angles égaux autour dudit axe, les saillies du second groupe s'étendant suivant un angle compris entre 15 et 75° par rapport au plan précité, caractérisée en ce que chaque saillie desdits premier et second groupes a une forme de section droite non circulaire semblable et en ce que les éléments allongés (32) comportent des extrémités tubulaires cylindriques ou sensiblement cylindriques au moins pour établir un emmanchement serré avec les saillies.

**Patentansprüche**

1. Raumfachwerk mit einer Vielzahl länglicher Glieder (32) und einer Vielzahl von Verbindern, die die länglichen Glieder miteinander verbinden, wobei jeder Verbinder einen Körper (10), eine erste Gruppe von zumindest vier Vorsprüngen (16) aufweist, die sich von dem Körper nach außen erstrecken und gleichwinklig um eine Achse (18) herum angeordnet sind, wobei diese Achse senkrecht auf einer Ebene steht, die parallel zu der Richtung verläuft, in der sich jeder Vorsprung der ersten Gruppe von dem Körper weg erstreckt, und wobei jeder Verbinder außerdem eine zweite Gruppe von zumindest vier Vorsprüngen (20) aufweist, die sich von dem Körper nach außen erstrecken und gleichwinklig um die genannte Achse herum angeordnet sind, wobei die Vorsprünge dieser zweiten Gruppe unter einem Winkel von 15° bis 75° zu der vorgenannten Ebene verlaufen, dadurch gekennzeichnet, daß jeder Vorsprung der ersten und zweiten Gruppe von ähnlicher, nicht kreisförmiger Querschnittsform ist und daß die länglichen Glieder verformbare, zylindrische oder im wesentlichen zylindrische, rohrförmige Enden aufweisen, um zumindest eine Steckverbindung mit entsprechenden Vorsprüngen zu bilden.

2. Raumfachwerk nach Anspruch 1, dadurch gekennzeichnet, daß die Vorsprünge (20) der zweiten Gruppe jeweils unter 45° oder im wesentlichen 45° zu der vorgenannten Ebene verlaufen.

3. Raumfachwerk nach Anspruch 1 oder 2, dadurch gekennzeichnet, daß jeder Vorsprung (16, 20) einen dreieckigen oder im wesentlichen dreieckigen Querschnitt aufweist.

4. Raumfachwerk nach Anspruch 3, dadurch gekennzeichnet, daß ein flaches oder im wesentliches flaches Teilstück (22) am Übergang zwischen jedem Paar angrenzender Seiten (24, 26) jedes Vorsprunges (16, 20) angeordnet ist.

5. Raumfachwerk nach einem der vorhergehenden Ansprüche, dadurch gekennzeichnet, daß die Zahl der Vorsprünge in der ersten und in der zweiten Gruppe gleich ist und daß die Vorsprünge (20) der zweiten Gruppe relativ zu den Vorsprüngen (16) der ersten Gruppe in ihrer Winkelstellung um den halben Winkel zwischen benachbarten Vorsprüngen (16) der ersten Gruppe um die genannte Achse (18) versetzt sind.

6. Raumfachwerk nach einem der vorhergehenden Ansprüche, dadurch gekennzeichnet, daß der Körper ein zylindrisches oder im wesentlichen zylindrisches Flächenteil (12) aufweist, von dem aus sich die erste Gruppe von Vorsprüngen (16) erstreckt und einen sphärischen oder im wesentlichen sphärischen Endteil (14), der sich an den zylindrischen Flächenteil (12) anschließt und von dem aus sich die zweite Gruppe von Vorsprüngen (20) erstreckt.

7. Raumfachwerk nach einem der vorhergehenden Ansprüche, dadurch gekennzeichnet, daß die Vorsprünge (16, 20) und der Körper (10) des Verbinders aus nicht flexiblem Kunststoffmaterial bestehen.

8. Raumfachwerk nach einem der vorhergehenden Ansprüche, dadurch gekennzeichnet, daß die länglichen Glieder (32) Rohre sind und aus deformierbaren Kunststoff bestehen.

9. Eine Vielzahl länglicher Glieder und eine Vielzahl von Verbindern für das Verbinden der länglichen Glieder zur Bildung eines Raumfachwerkes, wobei jeder Verbinder einen Körper (10), eine erste Gruppe von zuminedest vier Vorsprüngen (16) aufweist, die sich von dem Körper nach außen erstrecken und gleichwinklig um eine Achse (18) herum angeordnet sind, die senkrecht auf einer Ebene steht, die parallel zu der Richtung verläuft, in welcher sich jeder Vorsprung der ersten Gruppe von dem Körper erstreckt und wobei jeder Verbinder außerdem eine zweite Gruppe von zumindest vier Vorsprüngen (20) aufweist, die sich von dem Körper nach außen erstrecken und um die genannte Achse gleichwinklig herum angeordnet sind und die Vorsprünge der genannten zweiten Gruppe unter einem Winkel zwischen 15° und 75° zu der genannten Ebene verlaufen, dadurch gekennzeichnet, daß jeder Vorsprung der ersten und der zweiten Gruppe von ähnlicher, nicht kreisförmiger Querschnittsform ist und daß die länglichen Glieder (32) deformierbare, zylindrische oder im wesentlichen zylindrische, rohrförmige Enden aufweisen, die zumindest zur Bildung einer Steckverbindung mit den Vorsprüngen geeignet sind.

FIG.1.

FIG.2.

FIG.3.

FIG.4.